# EUROPÄISCHE PATENTSCHRIFT

(11) **EP 1 131 685 B1**
(45) Veröffentlichungstag und Bekanntmachung des Hinweises auf die Patenterteilung: **07.05.2003**
(21) Anmeldenummer: 99959224.9
(22) Anmeldetag: 22.10.1999
(51) Int. Cl.: G05B 19/042

(54) **VERFAHREN ZUM ÜBERPRÜFEN EINER AUSGABEEINHEIT**
METHOD FOR MONITORING AN OUTPUT UNIT
PROCEDE POUR CONTROLER UNE UNITE DE SORTIE

(30) Priorität: 09.11.1998 DE 19851558
(43) Veröffentlichungstag der Anmeldung: 12.09.2001
(73) Patentinhaber: SIEMENS AKTIENGESELLSCHAFT, 80333 München (DE)
(72) Erfinder: SCHÜTZ, Hartmut, D-91336 Heroldsbach (DE); RINGLER, Andrea, D-91257 Pegnitz (DE); MÜLLER, Manfred, D-91052 Erlangen (DE); SCHINNERL, Johann, A-8020 Graz (AT)
(86) Internationale Anmeldenummer: DE9903396
(87) Internationale Veröffentlichungsnummer: WO00028390

(56) Entgegenhaltungen:
- EP-A- 0 155 213
- EP-A- 0 292 914
- WO-A-96/28769
- WO-A-98/14848
- FR-A- 2 707 406

## Beschreibung

Die Erfindung betrifft ein Verfahren zum Überprüfen der Ausgabefunktion einer Ausgabeeinheit, insbesondere einer Binärsignal-Ausgabeeinheit einer sicherheitsgerichteten speicherprogrammierbaren Steuerung, die der Ansteuerung von Aktoren eines externen technischen Prozesses dient.

Bekannt sind sicherheitsgerichtete Binärsignal-Ausgabeeinheiten, die für jeden vorhandenen Ausgang eine Rückleseschaltung aufweisen, mit der die korrekte Funktion des jeweiligen Ausgangs durch Prüflesen nachweisbar ist. Die prozeßbedingten Ausgabe-Bitmuster werden durch einen Soll/Ist-Vergleich überprüft. Bei geringer Dynamik der Ausgangssignale ist man außerdem auf sog. Ergänzende Tests angewiesen, die innerhalb sicherheitstechnisch vorgeschriebener Zeitintervalle durchzuführen sind. In herkömmlichen Binärsignal-Ausgabeeinheiten existieren hierzu zwei Teststrategien:

Die höchste Testqualität wird durch Aufschalten einer vollständigen Menge von Test-Bitmustern auf die Ausgabeeinheit und durch Prüflesen dieser Test-Bitmuster erzielt. Nachteilig ist bei diesem vollständigen Test, daß an den Aktoren während kurzer Testimpulse Spannung anliegt, was insbesondere im Hinblick auf die Häufigkeit der Testimpulse die Lebensdauer der Aktoren verringern kann.

Eine mittlere Testqualität wird erreicht, wenn bei jedem Einschaltsignal, das über einen Ausgang der Ausgabeeinheit an den Prozeß übermittelt wird, die Fähigkeit dieses Ausgangs zum Übermitteln eines Abschaltsignals überprüft wird. Hierbei entstehen kurzzeitige Unterbrechungen angesteuerter Aktoren, was ebenso zu einer Verringerung der Standzeit der Aktoren führen kann.

Beide Tests weisen außerdem den Nachteil auf, ein häufiges Schalten der betreffenden lastbedingten Ströme zu bewirken. Dieser Nachteil macht sich neuerdings insbesondere bei technisch weiter entwickelten Ausgabeeinheiten bemerkbar. Früher überwogen einfach strukturierte Ausgabeeinheiten, deren ergänzender Test mit einer geringeren Anzahl unterschiedlicher Testmuster realisierbar war. Heutzutage weisen sicherheitsgerichtete Ausgabeeinheiten dagegen zunehmend ASICs und Mikroprozessoren bzw. Mikrocontroller auf. Für solche Strukturen sind mustersensitive Tests vorgeschrieben, woraus eine wesentliche Steigerung der Anzahl der Testmuster resultiert. Die Häufigkeit der Testmuster hat zudem noch andere nachteilige Auswirkungen auf das technische Umfeld wie EMV-Störungen, einen hohen Energieverbrauch, gesteigerte Geräuschentwicklung und die Entstehung mechanischer Schwingungen.

Die EP 0 292 914 A1 beschreibt eine Fehlerdiagnosevorrichtung zum Diagnostizieren eines von einer durch eine programmierbare Steuerung gesteuerten Vorrichtung entwickelten Fehlers, wobei Diagnosedaten ohne ein Fehlerdiagnoseprogramm ermittelbar sind, auch für eine Anzahl von asynchron gesteuerten Vorrichtungen, die gleichzeitig unter der Steuerung der programmierbaren Steuerung arbeiten.

Aufgabe der Erfindung ist es, die Anzahl der Bitmuster zu reduzieren, die beim Ergänzenden Test auf die Ausgabeeinheit aufgeschaltet und prüfgelesen werden.

Diese Aufgabe wird erfindungsgemäß dadurch gelöst, daß die Ausgabefunktion der Ausgabeeinheit innerhalb eines vorgebbaren Zeitintervalls allein anhand von Bitmustern überprüft wird, die innerhalb dieses Zeitintervalls nicht von der Ausgabeeinheit an Aktoren des externen technischen Prozesses übermittelt worden sind.

Die Erfindung umfaßt jeweils eine Variante für die obengenannten Teststrategien. Die erste Variante dient der Verringerung der Anzahl der Test-Bitmuster beim obengenannten vollständigen Ergänzenden Test. Bei einer vorgegebenen Gesamtmenge der innerhalb eines sicherheitstechnisch vorgegebenen Zeitintervalls auszugebenden und prüfzulesenden Bitmuster werden die prozeßbedingt auftretenden Ausgabe-Bitmuster in einer Liste bilanziert. Zu diesem Zweck verfügt die Ausgabeeinheit über einen Speicher, der so ausgelegt ist, daß er alle in einem Zeitintervall ausgegebenen Bitmuster aufnehmen kann. Zusätzlich werden nur die jeweils noch nicht aufgetretenen bzw. in der Liste aktivierten Bitmuster in Form von Test-Bitmustern ausgegeben und prüfgelesen. Diese Bilanzierung und Aktivierung der Bitmuster ist in jedem Zeitintervall von neuem durchzuführen, wobei zu Beginn jedes Zeitintervalls ein Zeitzähler zurückgesetzt und die Liste der Bitmuster gelöscht wird. Die Länge der Zeitintervalle ergibt sich aus den geltenden Sicherheitsvorschriften und beträgt beispielsweise eine Stunde. Treten alle zu überprüfenden Bitmuster sowieso prozeßbedingt innerhalb eines Zeitintervalls auf, braucht in diesem Zeitintervall kein weiteres Bitmuster zu Testzwecken aufgeschaltet und prüfgelesen zu werden. Wird dagegen keines der vorgegebenen zu überprüfenden Bitmuster innerhalb eines Zeitintervalls prozeßbedingt von der Ausgabeeinheit ausgegeben, werden in diesem Zeitintervall wie bisher alle vorgegebenen Test-Bitmuster aufgeschaltet und prüfgelesen. In den meisten Fällen wird ein Teil der zu überprüfenden Bitmuster prozeßbedingt auftreten, so daß eine verringerte Anzahl von Bitmustern testmäßig aufzuschalten und prüfzulesen ist.

Die zweite erfindungsgemäße Variante dient der Verbesserung des obengenannten Tests für mittlere Testqualität. Die prozeßbedingt aufgeschalteten Ausgabe-Bitmuster und die Abschalt-Test-Bitmuster werden in einer gegenüber der ersten Teststrategie reduzierten Soll-Liste markiert. Im übrigen unterscheidet sich die zweite Variante nicht von der ersten.

Durch das erfindungsgemäße Verfahren wird demnach die zu Testzwecken wiederholte Ausgabe von Testmustern vermieden. Die Aktoren werden durch die nach dem erfindungsgemäßen Verfahren durchgeführten Tests bis zu 50 % weniger belastet als bei der herkömmlichen Durchführung der Ergänzenden Tests. Die Lebensdauer der Aktoren wird so verlängert, und alle bisher aufgetretenen Nachteile wie EMV-Störungen, hoher Energieverbrauch, Geräuschentwicklung und mechanische Schwingungen werden verringert.

Im folgenden wird ein Ausführungsbeispiel des erfindungsgemäßen Verfahrens anhand von Zeichnungen näher erläutert.

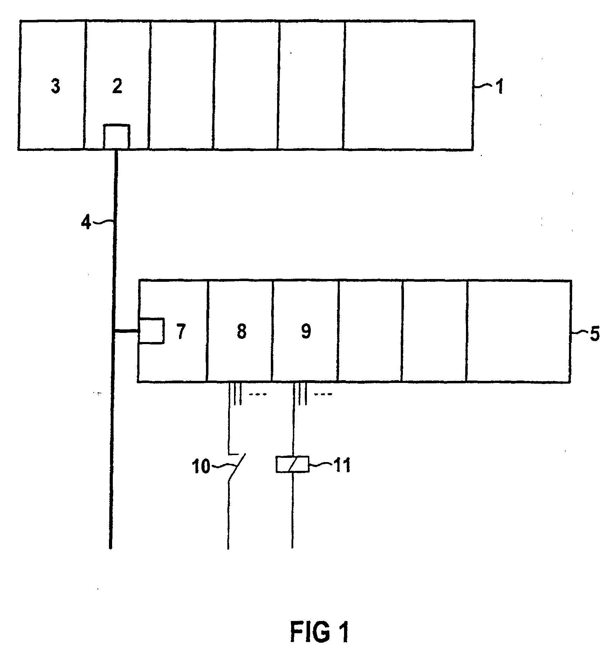

Fig. 1 zeigt die Anordnung einer sicherheitsgerichteten speicherprogrammierbaren Steuerung, bestehend aus einem übergeordneten Automatisierungsgerät in einem Zentralrahmen 1 mit einer sicherheitsgerichteten Zentraleinheit 2 und einer Stromversorgung 3. Ein Datenbus 4 verbindet den Zentralrahmen 1 mit zumindest einem Erweiterungsrahmen 5, in dem sich eine Buskopplungs-Baugruppe 7, nicht gezeichnete Peripherie-Baugruppen, eine Digitaleingabeeinheit 8 und eine Digitalausgabeeinheit 9 zur Überwachung bzw. Ansteuerung eines über mindestens einen Sensor 10 und mindestens einen Aktor 11 mit dem Erweiterungsrahmen 5 verbundenen externen technischen Prozesses befinden. Die Baugruppen im Erweiterungsrahmen 5 sind durch einen nicht dargestellten Erweiterungsrahmen-Bus verbunden. Ebenfalls nicht explizit dargestellt ist ein Speicher, in dem die innerhalb eines Zeitintervalls aufgetretenen Bitmuster bilanziert werden.

Die sicherheitsgerichtete speicherprogrammierbare Steuerung funktioniert wie folgt: Die Digitaleingabeeinheit 8 liest, je nach geforderter Sicherheitsklasse einkanalig oder zweikanalig, Signale vom Sensor 10 ein, leitet die Information weiter an die Zentraleinheit 2, die sie sicherheitsgerichtet z.B. mit bisher ermittelten Zwischenergebnissen sowie anderen Lesesignalen verknüpft und daraus Prozeßkommandos bildet, welche sie an die betreffende Digitalausgabeeinheit 9 leitet. Die Digitalausgabeeinheit 9 steuert die Aktoren 11 an, führt einen Soll/Ist-Vergleich der Kommandos durch und organisiert, gegenüber der Zentraleinheit 2 autark, ihre übrigen Sicherheitsmaßnahmen. Zentraleinheit 2 sowie Digitaleingabe- 8 und -ausgabeeinheit 9 testen sich jeweils selbst derart, daß die geforderte Sicherheitsklasse erreicht wird.

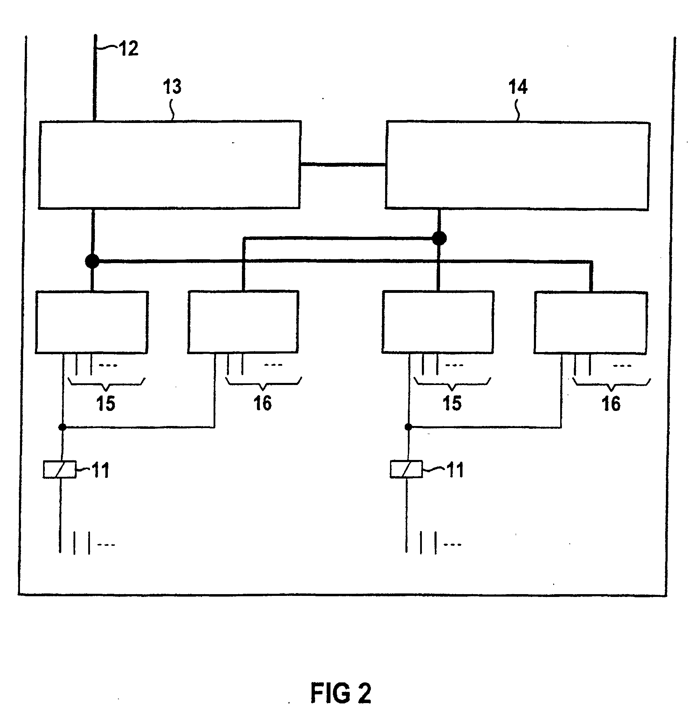

Fig. 2 verdeutlicht beispielhaft den Aufbau einer sicherheitsgerichteten Digitalausgabeeinheit 9, auf deren Selbsttest sich das erfindungsgemäße Verfahren bezieht. Die Kopplung an den Erweiterungsrahmen-Bus 12 und die Test-Steuerung erfolgt mittels zweier miteinander gekoppelter Prozessoren 13, 14. Die Ausgabeeinheit 9 verfügt über eine Anzahl von Ausgängen 15, von denen jeweils die Hälfte vom ersten Prozessor 13 und die Hälfte vom zweiten Prozessor 14 bearbeitet wird. Die zu jedem Ausgang 15 gehörigen Rückleseschaltungen 16 werden vom jeweils anderen Prozessor 14, 13 bearbeitet. Jeder Ausgang 15 und jede dazugehörige Rückleseschaltung 16 sind gemeinsam mit einem Aktor 11 verbunden.

Zuammenfassend ist zu sagen, daß die Zahl der ausgegebenen Prüfbitmuster auf das notwendige Minimum beschränkt wird.

Die vorliegende Erfindung läßt sich abschließend wie folgt darstellen:

Es wird ein Verfahren zum Überprüfen der Ausgabefunktion einer Ausgabeeinheit (9), insbesondere einer Binär-Ausgabeeinheit einer sicherheitsgerichteten speicherprogrammierbaren Steuerung, die der Ansteuerung von Aktoren (11) eines externen technischen Prozesses dient, angegeben, bei dem die Ausgabefunktion der Ausgabeeinheit (9) innerhalb eines vorgebbaren Zeitintervalls anhand von den prozeßbedingt ausgegebenen Bitmustern sowie von Bitmustern überprüft wird, die innerhalb dieses Zeitintervalls nicht von der Ausgabeeinheit (9) an Aktoren (11) des externen technischen Prozesses übermittelt worden sind, derart, daß die Zahl der ausgegebenen Prüfbit muster auf das notwendige Minimum beschränkt wird.

## Patentansprüche

1. Verfahren zum Überprüfen der Ausgabefunktion einer Ausgabeeinheit (9), insbesondere einer Binär-Ausgabeeinheit einer sicherheitsgerichteten speicherprogrammierbaren Steuerung, die der Ansteuerung von Aktoren (11) eines externen technischen Prozesses dient,
**dadurch gekennzeichnet,**
**daß** die Ausgabefunktion der Ausgabeeinheit (9) innerhalb eines vorgebbaren Zeitintervalls allein anhand von Bitmustern überprüft wird, die innerhalb dieses Zeitintervalls nicht von der Ausgabeeinheit (9) an Aktoren (11) des externen technischen Prozesses übermittelt worden sind.

2. Verfahren nach Anspruch 1,
**dadurch gekennzeichnet,**
**daß** die von der Ausgabeeinheit (9) an Aktoren (11) des externen technischen Prozesses übermittelten Bitmuster bilanziert werden.

3. Verfahren nach Anspruch 2,
**dadurch gekennzeichnet,**
**daß** nur die nicht bilanzierten Bitmuster als Test-Bitmuster der Ausgabeeinheit (9) aufgeschaltet und prüfgelesen werden.

4. Verfahren nach Anspruch 1,
**dadurch gekennzeichnet,**
**daß** die Ausgabefunktion der Ausgabeeinheit (9) von dieser Ausgabeeinheit (9) selbständig ohne Mitwirkung der Zentraleinheit (2) überprüft wird.

5. Vorrichtung (9) zur Ansteuerung von Aktoren (11) eines externen technischen Prozesses, insbesondere Vorrichtung zum Einsatz in Verbindung mit sicherheitsgerichteten speicherprogrammierbaren Steuerungen, deren Ausgabefunktion überprüfbar ist,
**dadurch gekennzeichnet,**
**daß** die Ausgabefunktion der Vorrichtung (9) innerhalb eines vorgebbaren Zeitintervalls allein anhand von Bitmustern überprüfbar ist, die innerhalb dieses Zeitintervalls nicht von der Vorrichtung (9) an Aktoren (11) des externen technischen Prozesses übermittelt worden sind.

6. Vorrichtung (9) nach Anspruch 5,
**dadurch gekennzeichnet,**
**daß** sie über einen Speicher verfügt, in dem die von der Vorrichtung (9) an Aktoren (11) des externen technischen Prozesses übermittelten Bitmuster bilanzierbar sind.

7. Vorrichtung (9) nach Anspruch 6,
**dadurch gekennzeichnet,**
**daß** nur die nicht bilanzierten Bitmuster als Test-Bitmuster der Ausgabeeinheit (9) aufschaltbar und prüflesbar sind.

8. Vorrichtung nach Anspruch 5,
**dadurch gekennzeichnet,**
**daß** die Ausgabefunktion der Ausgabeeinheit (9) von dieser Ausgabeeinheit (9) selbständig ohne Mitwirkung der Zentraleinheit (2) überprüfbar ist.

## Claims

1. Method for monitoring the output function of an output unit (9), in particular of a binary output unit of safety-oriented programmable logic controller which is used to control actuators (11) of an external technical process, **characterised in that** the output function of the output unit (9) is checked within a predetermined time interval by means of only such bit patterns that have not been transmitted within this time interval by the output unit (9) to actuators (11) of the external technical process.

2. Method according to Claim 1, **characterised in that** the bit patterns that are transmitted by the output unit (9) to actuators (11) of the external technical process are balanced.

3. Method according to Claim 2, **characterised in that** only non-balanced bit patterns are applied to the output unit (9) and check-read as test bit patterns.

4. Method according to Claim 1, **characterised in that** the output function of the output unit (9) is checked by this output unit (9) independently, without cooperation of the central unit (2).

5. Device (9) for controlling actuators (11) of an external technical process, in particular a device for use in connection with safety-oriented programmable logic controllers, whose output functions can be checked, **characterised in that** the output function of the device (9) is checked within a predetermined time interval by means of only such bit patterns that have not been transmitted within this time interval by the device (9) to actuators (11) of the external technical process.

6. Device (9) according to Claim 5, **characterised in that** it has a memory in which the bit patterns that are transmitted by the device (9) to actuators (11) of the external technical process can be balanced.

7. Device (9) according to Claim 6, **characterised in that** only non-balanced bit patterns are applied to the output unit (9) and check-read as test bit patterns.

8. Device according to Claim 5, **characterised in that** the output function of the output unit (9) is checked by this output unit (9) independently, without cooperation of the central unit (2).

## Revendications

1. Procédé pour tester la fonction de sortie d'une unité de sortie (9), notamment d'une unité de sortie binaire d'une commande à programme enregistré axée sur la sécurité qui sert à la commande d'actionneurs (11) d'un processus technique externe,
**caractérisé par le fait qu'**on teste la fonction de sortie de l'unité de sortie (9) pendant un intervalle de temps pouvant être prescrit à l'aide des seuls profils binaires qui n'ont pas été transmis pendant cet intervalle de temps par l'unité de sortie (9) à des actionneurs (11) du processus technique externe.

2. Procédé selon la revendication 1,
**caractérisé par le fait qu'**on répertorie dans un bilan les profils binaires transmis par l'unité de sortie (9) à des actionneurs (11) du processus technique externe.

3. Procédé selon la revendication 2,
**caractérisé par le fait que**, comme profils binaires de test, on n'applique à l'unité de sortie (9) et on ne lit pour vérification que les profils binaires non répertoriés.

4. Procédé selon la revendication 1,
**caractérisé par le fait que** la fonction de sortie de l'unité de sortie (9) est testée automatiquement par cette unité de sortie (9) sans coopération de l'unité centrale (2).

5. Dispositif (9) pour la commande d'actionneurs (11) d'un processus technique externe, notamment dispositif destiné à être utilisé en relation avec des commandes à programme enregistré axées sur la sécurité, dont la fonction de sortie peut être testée,
**caractérisé par le fait que** la fonction de sortie du dispositif (9) peut être testée pendant un intervalle de temps pouvant être prescrit à l'aide des seuls profils binaires qui n'ont pas été transmis pendant cet intervalle de temps par le dispositif (9) à des actionneurs (11) du processus technique externe.

6. Dispositif (9) selon la revendication 5,
**caractérisé par le fait qu'**il dispose d'une mémoire dans laquelle peuvent être répertoriés les profils binaires transmis par le dispositif (9) à des actionneurs (11) du processus technique externe.

7. Dispositif (9) selon la revendication 6,
**caractérisé par le fait que** seuls les profils binaires non répertoriés peuvent être appliqués comme profils binaires de test à l'unité de sortie (9) et être lus pour vérification.

8. Dispositif selon la revendication 5,
**caractérisé par le fait que** la fonction de sortie de l'unité de sortie (9) peut être testée par cette unité de sortie (9) automatiquement sans coopération de l'unité centrale (2).
